## Europäisches Patentamt

## European Patent Office

## Office européen des brevets

(11) Veröffentlichungsnummer: **0 134 931**
**B1**

(12) **EUROPÄISCHE PATENTSCHRIFT**

(45) Veröffentlichungstag der Patentschrift:
**09.03.88**

(21) Anmeldenummer: **84107262.2**

(22) Anmeldetag: **25.06.84**

(51) Int. Cl.⁴: **C 08 L 83/04** // (C08L83/04, 67:00)

(54) **Bei Raumtemperatur zu Elastomeren härtende Polyorganosiloxanmassen.**

(30) Priorität: **02.07.83 DE 3323911**

(43) Veröffentlichungstag der Anmeldung:
**27.03.85 Patentblatt 85/13**

(45) Bekanntmachung des Hinweises auf die Patenterteilung:
**09.03.88 Patentblatt 88/10**

(84) Benannte Vertragsstaaten:
**AT DE FR GB IT SE**

(56) Entgegenhaltungen:
**FR - A - 2 413 441**
**US - A - 3 776 977**

**CHEMICAL ABSTRACTS, Band 83, Nr. 20, 17. November 1975, Seite 71, Nr. 165530z, Columbus, Ohio, USA**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Würminghausen, Thomas, Dr., Christian-Hess-Strasse 65, D-5090 Leverkusen (DE)**
Erfinder: **Saykowski, Franz, Dr., Andreas-Gryphius-Strasse 1, D-5000 Köln 80 (DE)**
Erfinder: **Sattlegger, Hans, Dr., Auf dem Heidchen 9, D-5068 Odenthal (DE)**

## Beschreibung

Gegenstand der vorliegenden Erfindung sind Polyorganosiloxanmassen, die bei Zutritt von Luftfeuchtigkeit zu einem Elastomer härten und im wesentlichen aus reaktionsfähige Endgruppen aufweisenden Polydiorganosiloxanen, hydrolysierbaren Siliciumverbindungen, die in Summe mehr als zwei durch Wasser abspaltbare Gruppen aufweisen, einem gegebenenfalls modifizierten Polyester, einem Mittel zum Standfestmachen und bei Bedarf weiteren Bestandteilen wie Füllstoffen, Haftmitteln, Katalysatoren, Pigmenten, Oxidationsinhibitoren, $\alpha$, $\omega$-triorganosiloxyendgestoppten Polydiorganosiloxanen bestehen und durch intensives Vermischen hergestellt werden.

Die erfindungsgemässen Massen ergeben nach Vulkanisation Materialien, die sich durch besonders vorteilhafte mechanische Eigenschaften und einen angenehmen Oberflächenglanz auszeichnen.

Die erfindungsgemässen Massen sind bei Raumtemperatur in wasserdichten Gefässen über längere Zeit lagerfähig und sind ausserhalb eines derartigen Gefässes durch Wasser oder den Wasserdampf der Luft – also ohne Einmischen einer weiteren Verbindung vernetzbar.

Diese Massen härten von aussen nach innen im Laufe längerer Zeiträume und werden im folgenden als 1 K-RTV-Pasten bezeichnet. Sofern erwünscht, kann jedoch die Masse durch Einrühren einer weiteren Komponente, die Wasser in gelöster oder dispergierter Form enthält, zu einem willkürlich beschleunigt durchhärtenden System modifiziert werden.

Grundsätzlich verschieden von diesen 1 K-RTV-Massen sind die sogenannten 2 K-RTV-Massen, die nach dem Mischen der Bestandteile innerhalb kürzester Zeit vollständig in dicken Schichten durchhärten und meist als Abformmassen verwendet werden. Auch derartige Systeme lassen sich erfindungsgemäss herstellen.

1 K-RTV-Pasten sind bereits seit geraumer Zeit bekannt (vgl. z.B. DE-B 1 120 690, DE-B 1 223 546, DE-B 1 224 039, DE-B 1 247 646 und W. Noll. Chemie und Technologie der Silicone, Verlag Chemie, Weinheim, 1968) und haben einen aussergewöhnlich grossen Einsatzbereich gefunden. Entsprechend den vielen verschiedenen Anwendungsbereichen haben die beschriebenen Pasten aber alle irgendwelche Nachteile in der Anwendung oder in der Produktion, so dass die Anbieter versuchen, spezielle Systeme für die speziellen Anforderungsprofile zu entwickeln, sie z.B. völlig transparent, ölbeständig oder, was besonders wünschenswert ist, preisgünstiger herzustellen, sie gut haftend auf den verschiedensten Untergründen zu machen oder eine geringe Haftung auf einige speziellen Substraten zu bewirken.

So sind z.B. andere flüssige Polymere neben Polydiorganosiloxane zur Erreichung dieser o.a. Ziele eingesetzt worden wie z.B. Siliconharze (US-A 3 382 205), Blockcopolymere aus Polyether und Siloxan zum einfacheren Einbringen des Katalysators in ein 2 K-RTV System (US-A 3 324 058). In US-A 4 261 758 wird die Verwendung von Polyethern in geringen Mengen zum Standfestmachen von 1 K-RTV-Pasten, in DE-A-2 007 002 wird die Herstellung von 1 K-RTV-Pasten aus reaktionsfähige Endgruppen aufweisenden Polydiorganosiloxan, stickstoffhaltigem Silanvernetzer und zusätzlicher Verwendung von Polyethern bzw. daraus abgeleitet die Verwendung von Organopolysiloxan-Polyoxyalkylen Mischpolymerisaten zum gleichen Zweck beschrieben.

Statt flüssiger Polymere wurde versucht, durch die Einarbeitung von pulverförmigen Polymerpartikeln die anwendungsrelevanten Eigenschaften von 1 K-RTV-Pasten zu modifizieren, z.B. durch Verwendung von PVC- (DE-A 2 044 684), Polyacrylnitril - (US-A 3 497 570) oder Polyethylenpulver (DE-A 2 720 534). In DE-OS 2 855 192 wird die Verwendung von PVC-Plastisolen beschrieben.

Überraschenderweise wurde nun gefunden, dass man unter bestimmten Bedingungen auf einfache Art bisher nicht beschriebene 1 K-RTV-Pasten erhält, wenn man gegebenenfalls modifizierte Polyester mitverwendet. Die Herstellung und Verwendung von Silicon-Polyester-Copolymeren ist bekannt (vgl. ebenfalls: W. Noll, Chemie und Technologie der Silicone, Verlag Chemie, Weinheim, 1968), jedoch nicht im Bereich von 1 K-RTV-Siliconpasten, die unter Feuchtigkeitseinfluss zu einem Elastomer härten.

Normalerweise erwartet man, dass kurze Zeit nach dem Mischen von unterschiedlichen flüssigen Polymeren eine Entmischung der Phasen stattfindet.

Es wurde nun überraschend gefunden, dass man eine stabile Polydiorganosiloxan-Polyestermischung erhält, wenn man diese Verbindungen und zusätzlich eine weitere Verbindung, wie man sie üblicherweise zum Standfestmachen von Fugendichtungsmassen z.B. pyrogene Kieselsäure oder feinstverteilte, gefällte Kreide verwendet, mit einmischt.

Die Polyester für die erfindungsgemässen Massen werden in bekannter Weise durch Veresterungs- oder Umesterungsreaktion von Gemischen aus aliphatischen oder aromatischen Dicarbonsäure, ihren Anhydriden oder Estern und aliphatischen Dialkoholen hergestellt (vgl. Ullmann, Enzyklopädie der technischen Chemie, 14. Band, Urban und Schwarzenberg, München, 1963). Als Dicarbonsäuren werden vorzugsweise Adipin-, Sebacin-, Terephthal-, Phthal-, Isophthal, Malein-, Fumar-und Itaconsäure eingesetzt, als mehrwertige Alkohole finden vorzugsweise Verwendung: Ethylenglykol, Propandiol-1,2 und -1,3, Butandiol-1,3 und -1,4, Hexandiol-1,6, 2,2-Dimethylpropandiol-1,3 und Polyethylen- und Polypropylenglykole oder mehrwertige Alkohole, die 2–7 Ethergruppen im Molekül enthalten (vgl. DE-B-1 054 620). Über eine Veretherungsreaktion kann durch die Mitverwendung eines geeigneten Alkohols, wie z.B. Isodecanol, die Viskosität geregelt werden.

Für verzweigte Polyester werden höherfunktionelle Carbonsäure oder Alkohole eingesetzt; erwähnt seien Glycerin, 1,1,1-Trimethylolpropan, Hexantriol und Pentaerithryt (vgl. DE-C-1 105 160 und DE-B-1 029 147). Falls erwünscht, können auch spezielle Polyester, die durch Polymerisation von Lactonen oder durch Copolymerisation von Lactonen oder durch Copolymerisation von Epoxiden mit cyclischen Anhydriden hergestellt wurden, eingesetzt werden (vgl. Hamann, Makromol Chem. 51 (1962), 53 und R.F. Fischer, J. Poly. Sci 44 (1960), 155).

Geeignete Polyester im Sinne der Erfindung sind auch Polycarbonate oder Mischesterpolycarbonate. Diese Polyester können allein oder in Mischung mit anderen Polyestern oder Polyethern eingesetzt werden.

Die Molgewichte der Polyester liegen zwischen 600 und 10 000, vorzugsweise von 800 und 4000, die OH-Zahlen bis zu 80, vorzugsweise bis zu 45.

Zwar sind die mit diesen Polyestern hergestellten Massen mischungsstabil, die Lagerstabilität und die Tropfzeit werden aber durch hohe Polyestermengen und/oder hohe OH-Zahlen verkürzt.

Überraschenderweise wurde festgestellt, dass die Lagerstabilität derartige Massen noch zu verbessern ist, wenn die Polyesterkomponente getrennt von den übrigen Bestandteilen einer RTV-Siliconpaste vor dem Einmischen durch eine Vorreaktion modifiziert wird.

Diese bevorzugte Ausführungsform kann durch verschiedene Massnahmen vollzogen werden; z.B. durch Carbonylierung des Polyesters mit Carbonsäureanhydrid z.B. mit Essigsäureanhydrid, Urethanisierung mit Isocyanaten z.B. Cyclohexylisocyanat, Hexamethylen-1,6-diisocyanat oder Toluolsulfonylisocyanat bzw. Silylierung mit hydrolytisch labilen Silanen. Neben diesen bevorzugen sind selbstverständlich auch andere Modifizierungsformen, z.B. Veretherungen, möglich.

So erreicht man z.B. bei Einrühren der stöchiometrischen Menge eines Isocyanates nach einiger Zeit ein visuell unverändertes Produkt, das mit den üblichen Komponenten einer 1 K-RTV-Paste eine lagerstabile Formulierung ergibt. Je nach der Reaktivität des verwendeten Isocyanates erweist sich die Anwendung höherer Temperaturen und/oder eines Katalysators wie z.B. Dibutylzinndilaurat oder eines Amins als vorteilhaft.

Derartige gegebenenfalls modifizierte Polyester werden in Mengen von 1 bis 55 Gew.%, vorzugsweise von 10 bis 45 Gew.%, und insbesondere in Mengen von 25-35 Gew.%, bezogen auf das Gewicht der fertigen Paste, verwendet.

Weiterhin ist es eine bevorzugte Massnahme, dass man durch Abmischen des Polyesters mit mindestens etwa stöchiometrischen Mengen hydrolytisch labiler Silane bei Raumtemperatur oder leicht erhöhter Temperatur Reaktionsprodukte erhält, die als zusätzliche Komponente bei der Herstellung von lagerstabilen 1 K-RTV-Pasten miteingemischt werden können. Unter der Bezeichnung hydrolytisch labile Silane sollen hier sowohl Siliziumverbindungen mit drei und/oder vier hydrolysierbaren Gruppen oder Gemische dieser Verbindungen (in der Literatur auch als Silanvernetzer bezeichnet) als auch Gemische von mono und/oder difunktionellen mit tri und/oder tetrafunktionellen Siliziumverbindungen, die in Summe mehr als zwei hydrolysierbare Gruppen tragen, verstanden werden. Dabei können durchaus in einem siliziumhaltigen Molekül unterschiedliche hydrolytisch labile Abgangsgruppen vorhanden sein, bzw. durch unzureichenden Wasserausschluss aus den Siliziumverbindungen deren partielle Hydrolyseprodukte entstanden sein. Geeignete Siliziumverbindungen sind Alkoxysilane, Acyloxysilane, Amidosilane, Ketoximsilane, Alkenyloxysilane, Aminoxysilane, Aminosilane, Hexamethyldisilazan oder gemischtsubstituierte Silane wie z.B. Methylalkoxyamidosilane, Oximaminosilane, Alkoxyalkenyloxysilane. Statt dieser und ähnlicher in der Patentliteratur beschriebenen Siliziumverbindungen können auch deren Vorprodukte wie z.B. $CH_3Si(OC_2H_5)_2Cl$ zur Reaktion eingesetzt werden. Neben den hydrolysierbaren Gruppen in den Siliziumverbindungen können die über Si-C-Bindungen verknüpften Gruppierungen ausser Alkyl- und Aryl- auch Alkenylgruppen mit Amin-, Amid-, Carboxyl-, Methacryl-, Epoxy-, Mercapto-, oder Isocyanatfunktionen sein.

Wird die Polyester-Silylierungsreaktion mit einem ausreichenden Überschuss an Silanvernetzer durchgeführt, kann gegebenenfalls auch bei der Formulierung der Paste auf den sonst üblichen Zusatz eines Silanvernetzers verzichtet werden, so dass auf die sonst notwendige Aufstellung eines zusätzlichen Lagertanks für die Herstellung von 1 K-RTV-Pasten verzichtet werden kann.

Als reaktionsfähige Endgruppen aufweisende Polydiorganosiloxane werden zur Herstellung der 1 K-RTV-Pasten wegen der leichten Zugänglichkeit α, ω-Dihydroxypolydimethyl-siloxane der Viskosität von etwa 100 mPa.s bis etwa $10^6$ mPa.s verwendet. Statt der methylgruppen-haltigen Polymere können auch solche verwendet werden, bei denen mindestens ein Teil der Methylgruppen durch Vinyl-, Phenyl-, längerkettige Alkyl- oder Haloalkylgruppen ersetzt ist. Diese Polymeren sollen im wesentlichen linear sein, geringe Anteile von verzweigend wirkenden Monoorganosiloxyeinheiten können jedoch anwesend sein.

Die Hydroxylgruppen der Polymere können durch andere hydrolytisch abspaltbare Endgruppen ersetzt worden sein, wie z.B. durch Alkoxy-, Alkoxyalkenyloxy-, Acyloxygruppen, Si-gebundene Wasserstoffatome, Amin-, Amid- oder Hydroxylamingruppen.

Sofern der zuzumischende gegebenenfalls modifizierte Polyester nicht mit einer auch zur Vulkanisationsreaktion ausreichenden Menge eines Silanvernetzers umgesetzt worden war, muss zur Vulkanisationsreaktion der erfindungsgemässen Pasten bei Feuchtigkeitszutritt ein sogenannter Vernetzer bei der Herstellung der Paste zugesetzt werden. Unter Vernetzer werden hier Silane mit mindestens drei Hydrolytisch labilen Abgangsgruppen oder ein Gemisch von Silanen mit in Summe mehr als zwei hydrolytisch labilen Abgangsgruppen verstanden, wobei die Abgangsgruppen untereinander alle identisch oder verschieden sein können. Infrage kommen z.B. Methyl-, Ethyl-, oder Vinylacetoxysilane, Cyclohexylaminomethyl-triethoxysilan, Gemische von Amido-, Amino und Alkoxysilanen, Methyldiacetamidoethoxysilan, Methyldiisopropenoxyethoxysilan, cyclische bzw. lineare Siloxane mit mehreren Aminoxyabgangs-Gruppen, Dimethyldiacetamidosilan mit Methyldiacetamidoethoxysilan.

Entsprechend der gewünschten Formulierung werden diese Substanzen mit einem thixotropierend wirkenden Material wie pyrogener Kieselsäure, gemahlener Dolomit oder feinst verteilter Kreide intensiv unter Feuchtigkeitsausschluss vermischt bis je nach Wunsch eine standfeste Paste (DIN 52454) oder eine fliessfähige Masse resultiert und anschliessend in wasserdichte Lagerbehälter verpackt. So hergestellte Pasten sind unter Feuchtigkeitssausschluss lagerstabil und zeigen keine Entmischung in eine Polysiloxan- und eine Polyesterphase. Weitere Bestandteile zur Herstellung der erfindungsgemässen Formulierung können ausser dem $\alpha$, $\omega$-Di-hydroxypolydimethylsiloxan und dem gegebenenfalls modifizierten Polyester sein: Katalysatoren wie Dibutylzinndiacetat, UV-Absorber, Fungizide, Alterungsschutzmittel, Parfümöle, Weichmacher wie $\alpha$, $\omega$-Trimethylsiloxypolydimethylsiloxane, Polybutene, Lösungsmittel wie Cyclohexan, Paraffinkohlenwasserstoffe, Alkylaromaten, mineralische oder organische pulverförmige Füllstoffe wie Kreiden, Polyethylenpulver, Farbkörper, trockner wie hydrolyseempfindliche Titanverbindungen, Haftmittel wie Dibutoxidiacetoxysilan, $\gamma$-Glycidopropyl-triethoxysilan. Die einzelnen Bestandteile der erfindungsgemässen Pasten werden in Mengen eingesetzt wie sie üblicherweise für derartige Systeme verwendet werden. So ist z.B. der Vernetzer in Mengen von 1 bis 20 Gew.%, vorzugsweise 2 bis 10 Gew.% und besonders bevorzugt 3 bis 5%, bezogen auf die Gesamtmasse, anwesend. Das thixotropierend wirkende Material wird in Mengen von 1 bis 70 Gew.%, vorzugsweise 3 bis 65%, eingesetzt.

Die folgenden Beispiele sollen die Herstellung der erfindungsgemässen Pasten und deren Eigenschaften erläutern. Die Herstellung der Pasten erfolgte in allen Fällen in Planetenmischern, kann jedoch in anderen üblicherweise verwendeten Maschinen durchgeführt werden, die Viskositätsangaben beziehen sich auf Messungen bei 25°C.

Beispiel 1

64,6 g $\alpha$, $\omega$-Dihydroxypolydimethylsiloxan der Viskosität 50 000 mPas, 25 g eines Polyesters der OH-Zahl 8,8 und der Viskosität 1200 mPa.s, der aus Phthalsäure, Hexandiol-1,6 und Isodecanol hergestellt wurde, 4,0 g Ethyltriacetoxysilan, 0,9 g Tetraethyoxysilan, 5,5 g pyrogene Kieselsäure (Oberfläche nach BET 110 m²/g) sowie 0,01 g Dibutylzinndiacetat werden intensiv in einem Planetenmischer verrührt. Es resultiert eine lagerstabile, weisse Paste mit angenehmer, glänzender Oberfläche.

Ein 2 mm dicker Probekörper ergibt nach 7 tägiger Lagerung an der Luft ein Vulkanisat mit den mechanischen Daten:

Alle aufgeführten Werte werden nach DIN 53 504 bzw. DIN 53 505 bestimmt.

| | |
|---|---|
| Shore A-Härte: | 12 |
| Elastizitätsmodul 100%: | 0,14[MPa] |
| Bruchdehnung: | 417% |
| Zugfestigkeit: | 0,34[MPa] |

Beispiel 2 (Vergleich)

64,6 g eines $\alpha$, $\omega$-Dihydroxypolydimethylsiloxans werden mit 25 g eines Polyesters der OH-Zahl 54 vermischt. Dieser Polyester wurde durch Reaktion von Adipinsäure mit Diethylenglykol hergestellt. Desweiteren werden 4,0 g Ethyltriacetoxysilan, 0,9 g Tetraethoxysilan. 5,5 g pyrogene Kieselsäure mit einer durchschnittlichen Oberfläche von 110 m²/g nach BET und 0,01 g Dibutylzinndiacetat zugegeben. Die so hergestellte Paste ist bereits nach knapp zwei Stunden verstrammt und kann nicht mehr aus dem Lagerbehälter entnommen werden.

Beispiel 3

Der Polyester des Beispiels 2 wird bei 130°C drei Stunden mit einem Überschuss Essigsäureanhydrid umgesetzt und anschliessend zwei Stunden bei 150°C entgast. 34,2 g des resultierenden Materials mit der OH-Zahl von <1 werden mit 36,9 g $\alpha$, $\omega$-Dihydroxypolydimethylsiloxan der Viskosität 50 000 mPas, 14,5 g $\alpha$, $\omega$-Trimethylsiloxypolydimethylsiloxan der Viskosität 1000 mPas, 4,0 g Ethyltriacetoxysilan, 0,9 g Dibutoxydiacetoxysilan, 5,5 g pyrogener Kieselsäure der durchschnittlichen BET-Oberfläche von 110 m²/g und 0,01 g Dibutylzinndiacetat vermischt. Die erhaltene standfeste lagerstabile Paste ergibt nach der Vulkanisation ein Material mit den mechanischen Daten (nach sieben Tagen gemessen):

| | |
|---|---|
| Shore A-Härte: | 13 |
| Elastizitätsmodul 100%: | 0,17 [MPa] |
| Bruchdehnung: | 640% |
| Zugfestigkeit: | 0,63 [MPa] |

Beispiel 4

Der Polyester des Beispiels 2 wird in Toluol mit einem Überschuss Cyclohexylisocyanat 3 Stunden auf 130°C erhitzt und 2 Stunden bei dieser Temperatur am Vakuum von flüchtigen Anteilen befreit. Das Reaktionsprodukt hat eine OH-Zahl von 0,5. In 25 g dieses Materials werden 60,2 g $\alpha$, $\omega$-Dihydroxypolydimethylsiloxan der Viskosität 50 000 mPa.s, 4,5 g Di-i-butoxydi-acetessigsäureethylester-titanat-(IV), 5,5 g pyrogene Kieselsäure mit der durchschnittlichen BET-Oberfläche von 110 m²/g, 0,7 g Dibutylzinndilaurat und 4,0 g Methyldi-N-methylbenzamidoethoxysilan gemischt. Die standfeste Paste vulkanisiert zu einem Silicongummi, der nach sieben Tagen fol-

gende mechanische Werte ergibt:

Shore A-Härte:              14
Elastizitätsmodul 100%: 0,16 [MPa]
Bruchdehnung:            723%
Zugfestigkeit:            0,81 [MPa]

Beispiel 5

64,6 g α, ω-Dihydroxypolydimethylsiloxan der Viskosität 50 000 mPa.s werden mit 25 g eines aus Butandiol und Ethylenglykol (Verhältnis 30:70) und Adipinsäure hergestellten Polyester des mittleren Molekulargewichtes 2000, der wie im Beispiel 3 beschrieben mit Essigsäureanhydrid modifiziert wurde, vermischt. Ausserdem werden 4,0 g Ethyltriacetoxysilan, 0,9 g Tetraethoxysilan, 5,5 g pyrogener Kieselsäure der mittleren Oberfläche 110 m²/g und 0,01 g Dibutylzinndiacetat eingearbeitet. Die standfeste Paste vulkanisiert zu einem Silicongummi, der nach 7 Tagen die Werte ergibt:

Shore A-Härte:              21
Elastizitätsmodul 100%: 0,42 [MPa]
Bruchdehnung:            425%
Zugfestigkeit:            1,15 [MPa]

Beispiel 6

64,6 g α, ω-Dihydroxypolydimethylsiloxan der Viskosität 50 000 mPa.s werden mit 29,0 g eines Polyesters aus Adipinsäure und Butandiol/Ethylenglykol (Verhältnis 3:7) mit dem mittleren Molekulargewicht 4000 und der OH-Zahl 28, der getrennt von den übrigen Bestandteilen in einer 1½ stündigen Vorreaktion bei 50°C mit Ethyltriacetoxysilan im Verhältnis von 1 zu 0,16 umgesetzt wurde und 0,9 g Tetraethoxysilan, 5,5 g pyrogener Kieselsäure mit der mittleren Oberfläche nach BET von 110 m²/g und 0,01 g Dibutylzinndiacetat in einem Planetenmischer vermischt. Die standfeste Paste zeigt nach 7 Tagen nach Beginn der Vulkanisation die mechanischen Daten:

Shore A-Härte:              22
Elastizitätsmodul 100%: 0,39 [MPa]
Bruchdehnung:            424%
Zugfestigkeit:            1,28 [MPa]

Beispiel 7

64,6 g α, ω-Dihydroxypolydimethylsiloxan der Viskosität 50 000 mPa.s werden mit 33,1 g des Polyesters des Beispiel 2 vermischt, der zuvor im Verhältnis 1:0,32 in einer getrennten Vorreaktion 1½ Stunden lang bei 50°C mit Methyltriisobutanonoximosilian umgesetzt wurde, ausserdem werden 5,5 g pyrogener Kieselsäure mit der durchschnittlichen BET-Oberfläche von 110 m²/g und 0,05 g Dibutylzinndiacetat im Planetenmischer eingerührt. Die standfeste Paste zeigt 7 Tage nach Beginn der Vulkanisation die mechanischen Werte:

Shore A-Härte:              23
Elastizitätsmodul 100%: 0,41 [MPa]
Bruchdehnung:            474%

Zugfestigkeit:            1,46 [MPa]

Beispiel 8

64,6 g α, ω-Dihydroxypolydimethylsiloxan der Viskosität 50 000 mPa.s werden mit 25 g des Polyester des Beispiel 2 vermischt, der zuvor im Verhältnis 1:0,077 mit Hexamethyldisilazan bei 100°C eine Stunde lang erhitzt wurde. Weiterhin werden die vier letzten Bestandteile des Beispiels 3 in den dort angegebenen Mengen eingemischt. Der Silicongummi zeigt 7 Tage nach Beginn der Vulkanisationsreaktion die mechanischen Werte:

Shore A-Härte:              13
Elastizitätsmodul 100%: 0,21 [MPa]
Bruchdehnung:            437%
Zugfestigkeit:            0,51 [MPa]

Beispiele 9

35 g α, ω-Dihydroxypolydimethylsiloxan der Viskosität 50 000 mPa.s werden mit 20 g des entsprechend Beispiel 4 modifizierten Polyester, 4,0 g Di-i-butoxydi-acetessigsäure-ethylester-titanat-(IV), 30 g mit Stearinsäure gecoateter Kreide, 5,0 g pyrogener Kieselsäure mit der durchschnittlichen BET-Oberfläche von 150 m²/g, 0,7 g Dibutylzinndilaurat und 4,0 g Methyldi-N-methylbenzamido-ethoxysilan gemischt. Je eine Probe der ausgestrichenen Paste wird nach 24 Stunden und 48 Stunden mit einem deckenden Lack auf Alkydbasis und einer filmbildenden Lasur überstrichen. Der Verlauf ist als gut zu bezeichnen. Die Haftung der Anstriche wird gemäss dem Boing-Test entsprechend ASTM D 3359-70 beurteilt und beträgt 100%.

Die standfeste Paste ergibt 7 Tage nach Beginn der Vulkanisation einen Gummi mit den mechanischen Daten:

Shore A-Härte:              27
Elastizitätsmodul 100%: 0,37 (MPa)
Bruchdehnung:            554%
Zugfestigkeit:            0,8 (MPa)

Beispiel 10

646 g α, ω-Dihydroxypolydimethylsiloxan der Viskosität 50 000 mPa.s werden mit 45 g Di-i-butoxy-di-acetessig-säureethylester-titanat-(IV), 55 g pyrogener Kieselsäure mit der durchschnittlichen BET-Oberfläche von 110 m²/g, 7 g Dibutylzinndilaurat und 342 g des Umsetzungsproduktes des im Beispiel 2 beschriebenen Polyesters mit Methyldi-N-methylbenzamidosilan vermischt. Dieses Umsetzungsprodukt wird zuvor getrennt von den übrigen Produkten durch 1½ stündiges Erwärmen auf 50°C der beiden Komponenten im Verhältnis 1:0,37 hergestellt. Eine Probe der Paste vulkanisiert an der Luft zu einem Material, an dem nach 7 Tagen die Werte erhalten werden:

Shore A-Härte:              21
Elastizitätsmodul 100%: 0,28 [MPa]
Bruchdehnung:            407%
Zugfestigkeit:            0,92 [MPa]

Beispiel 11

60,0 g α, ω-Dihydroxypolydimethylsiloxan der Viskosität 50 000 mPa.s werden mit 39,3 g des Polyesters entsprechend Beispiel 4 und 3,9 g Dimethyldibutylaminosilan innig vermischt. Dieser Mischung werden 90 g stearinsäuregecoateter Kreide mit einer mittleren Korngrösse von kleiner 0,1 μm sowie 25 g α, ω-Triorganosiloxypolydimethylsiloxan der Viskosität 100 mPa.s zugesetzt. Nach intensiver Homogenisierung der Bestandteile werden 9 g Methyltributylaminosilan eingerührt.

Die standfeste Paste vulkanisiert zu einem Silicongummi an dem nach sieben Tagen die mechanischen Werte gemessen werden:

Shore A-Härte:　　　　　　　26
Elastizitätsmodul 100%:　0,39 [MPa]
Bruchdehnung:　　　　　　573%
Zugfestigkeit:　　　　　　0,94 [MPa]

Beispiel 12

64,6 g α, ω-Dihydroxypolydimethylsiloxan der Viskosität 50 000 mPa.s werden mit 25 g des entsprechenden Beispiel 4 modifiziertem Polyesters, 7,0 g pyrogener Kieselsäure mit der durchschnittlichen BET-Oberfläche von 150 m²/g und 4 g Methyltri-n-butylaminosilan vermischt.

Eine Probe der Paste ergab 7 Tage nach Feuchtigkeitszutritte ein Material mit den mechanischen Daten:

Shore A-Härte:　　　　　　　24
Elastizitätsmodul 100%:　0,47 [MPa]
Bruchdehnung:　　　　　　495%
Zugfestigkeit:　　　　　　1,42 [MPa]

Beispiel 13

Der Polyester entsprechend Beispiel 2 wird im Verhältnis 1 zu 0,25 während 90 Minuten mit Ethyltriacetoxysilan auf 50°C erwärmt.

31,2 g dieses Produktes, 64,6 g α, ω-Dihydroxypolydimethylsiloxan der Viskosität 50 000 mPa.s, 0,9 g Tetraethoxysilan, 5,5 g pyrogene Kieselsäure der mittleren Oberfläche nach BET von 110 m²/g und 0,01 g Dibutylzinndiacetat werden intensiv vermischt. Die Paste vulkanisiert zu einem Elastomer mit den nach 14 Tagen gemessenen Werten der Tabelle 1.

Beispiel 14

61,5 g α, ω-Dihydroxypolydimethylsiloxan der Viskosität 50 000 mPa.s werden mit 24,1 g α, ω-Trimethylsiloxypolydimethylsiloxan der Viskosität 1000 mPa.s, 4,0 g Ethyltriacetoxysilan, 0,9 g Dibutoxydiacetoxysilan, 9,5 g pyrogener Kieselsäure mit der mittleren Oberfläche von 150 m²/g nach BET und 0,01 g Dibutylzinndiacetat intensiv vermischt. Nach 14tägiger Aushärtung hat das Elastomer die Werte wie in Tabelle 1 angegeben.

Proben der Elastomere von Beispiel 13 und 14 werden 70 Stunden lang bei 150°C in ASTM-3-Öl gelagert. Das Elastomer entsprechend Beispiel 14 ist nach dieser Zeit zerstört. Von dem Elastomer nach Beispiel 13 werden die in Tabelle 1 aufgeführten Werte gemessen:

Tabelle 1

| | Beispiel 13 | 14 | 13 ASTM-3-ÖL 70 Std./150°C | 14 |
|---|---|---|---|---|
| Shore A-Härte | 17 | 22 | 11 | – |
| Elastizitätsmodul [Mpa]100% | 0,22 | 0,4 | 0,28 | – |
| Bruchdehnung % | 480 | 600 | 460 | – |
| Zugfestigkeit [Mpa] | 0,71 | 1,40 | 0,66 | – |

Beispiel 15

90 g α, ω-Dihydroxypolydimethylsiloxan der Viskosität 50 000 mPa.s werden mit 15 g α, ω-Trimethylsiloxy-polydimethylsiloxan der Viskosität 1000 mPa.s, 45 g Polyester entsprechend Beispiel 1 und 150 g eines Dolomites (mittlerer Korndurchmesser 2,0 μm) entsprechend Beispiel 11 vermischt. In diese Paste wird eine Abmischung aus 3,0 g Methyltrimethoxysilan, 0,9 Ethylpolysilikat (Gehalt an SiO$_2$ : 40 Gew.-%) sowie 0,15 g Dibutylzinndiacetat eingerührt.

Die Masse vulkanisiert zu einem Silicongummi mit der nach einem Tag gemessenen Mechanik:

Shore A-Härte:　　　　　　　12
Elastizitätsmodul 100%:　0,13 (MPa)
Bruchdehnung:　　　　　　468%
Zugfestigkeit:　　　　　　0,33 (MPa)

Beispiel 16

90 g α, ω-Dihydroxypolydimethylsiloxan der Viskosität 50 000 mPa.s werden mit 15 g α, ω-Trimethylsiloxypolydimethylsiloxan der Viskosität mPa.s, 45 g Polyester entsprechend Beispiel 1, 3,0 g eines α, ω-Dihydroxypolydimethylsiloxans der Viskosität 90 mPa.s und 135 g einer Kreide entsprechend Beispiel 11 vermischt. In diese Paste wird eine Abmischung aus 3,0 g Methyltriethoxysilan, 0,9 g Ethylpolysilikat (Gehalt an SiO$_2$:40 Gew.-%) sowie 1,2 g Dibutylzinndilaurat eingerührt. Die Masse vulkanisiert zu einem Silicongummi mit der nach einem Tag gemessenen Mechanik:

Shore A-Härte:　　　　　　　20
Elastizitätsmodul 100%:　0,33 [MPa]
Bruchdehnung:　　　　　　734%
Zugfestigkeit:　　　　　　1,25 [MPa]

**Patentansprüche**

1. Bei Raumtemperatur zu Elastomeren härtbare Polydiorganosiloxanmassen, erhältlich durch Vermischen von reaktive Endgruppen enthaltenden Polydiorganosiloxanen mit gegebenenfalls zur Herabsetzung der OH-Zahl carboxylierten, urethanisierten, veretherten und/oder silylierten Polyestern, die ein Molgewicht zwischen 600 und 10 000 aufweisen und die in einer Menge von 1 bis 55 Gew.-%, bezogen auf das Gesamtgemisch, eingesetzt werden, als zwei hydrolysierbare Gruppen enthaltende Siliciumverbindungen, und gegebenenfalls mit in Summe mehr als zwei hydrolysierbare Gruppen enthaltende Silicumverbindungen, sowie weiteren an sich bekannten Zusätzen.

**Claims**

1. Polydiorganosiloxane compositions which can be hardened at room temperature into elastomers and which are obtainable by mixing polydiorganosiloxanes containing reactive end groups with polyesters which have optionally been carboxylated, urethanised, etherified and/or silylated to decrease the OH number, which have a molecular weight of between 600 and 10,000 and which are used in a quantity of 1 to 55% by weight, based on the total mixture, fillers with thixotropic action, condensation catalysts and, if appropriate, with silicon compounds containing a total of more than two hydrolysable groups and other additives known per se.

2. Polydiorganosiloxane compositions according to Claim 1, characterised in that polyesters containing OH groups are reacted with hydrolysable silanes in a reaction carried out separately from the other constituents.

3. Polydiorganosiloxane compositions according to Claim 3, characterised in that polyesters containing OH groups are reacted with acyloxysilanes.

**Revendications**

1. Masses de polydiorganosiloxannes durcissables à température ambiante en élastomères et qu'on obtient par mélange de polydiorganosiloxannes contenant des groupes terminaux réactifs avec des polyesters éventuellement carboxylés, uréthannisés, éthérifiés et/ou silylés pour abaissement de l'indice d'OH, ces polyesters ayant un poids moléculaire de 600 à 10 000 et étant utilisés en quantités de 1 à 55% en poids, par rapport au mélange total, des matières de charge conférant des propriétés thixotropes, des catalyseurs de condensation et le cas échéant des composés du silicium contenant au total plus de deux groupes hydrolysables, ainsi que d'autres additifs connus en soi.

2. Masses de polydiorganosiloxannes selon la revendication 1, caractérisées en ce que l'on fait réagir des polyesters contenant des groupes OH, séparément des autres constituants, avec des silanes hydrolysables.

3. Masses de polydiorganosiloxannes selon la revendication 3, caractérisées en ce que l'on fait réagir des polyesters contenant des groupes OH avec des acyloxysilanes.